# EUROPEAN PATENT APPLICATION

(11) **EP 4 796 777 A1**
(43) Date of publication of application: **26.08.2026**
(21) Application number: 24900503.4
(22) Date of filing: 26.11.2024
(51) Int. Cl.: F02M 25/08, B60K 15/035

(54) **GAS-LIQUID SEPARATION DEVICE**

(30) Priority: 04.12.2023 JP 2023204944
(71) Applicant: Sumitomo Riko Company Limited, Komaki-shi, Aichi 485-8550 (JP)
(72) Inventor: INOUE, Tomoki, Komaki-shi, Aichi 485-8550 (JP); SHIMOJO, Makoto, Komaki-shi, Aichi 485-8550 (JP); NAKAMURA, Koichi, Komaki-shi, Aichi 485-8550 (JP); MIZUNO, Fumiya, Komaki-shi, Aichi 485-8550 (JP); SAKURAI, Masanori, Atsugi-shi, Kanagawa 243-0123 (JP); GOTOU, Hiroshi, Atsugi-shi, Kanagawa 243-0123 (JP); KURODA, Kohei, Atsugi-shi, Kanagawa 243-0123 (JP); KAMEI, Masashi, Atsugi-shi, Kanagawa 243-0123 (JP); TANIGAWA, Yoshihiko, Atsugi-shi, Kanagawa 243-0123 (JP)
(74) Representative: SSM Sandmair
(86) International application number: PCT/JP2024/041827
(87) International publication number: WO 2025/121209

(57) **Abstract**

Provided is a gas-liquid separation device with a novel structure capable of preventing movement of foreign matter from a canister side to a fuel tank side, such movement being otherwise promoted internally. A gas-liquid separation device 10 is provided on a fuel gas flow path 3 interconnecting a fuel tank 1 and a canister 2, and is provided with: a gas passage space 14 comprising a gas inlet 30 serving as an opening on a fuel tank side and a gas outlet 32 serving as an opening on a canister side, the gas passage space 14 constituting a part of the fuel gas flow path 3; and restriction parts 34, 60 restricting movement of foreign matter in the gas passage space 14 from the gas outlet 32 to the gas inlet 30.

## Description

### TECHNICAL FIELD

The present invention relates to a gas-liquid separation device provided on a fuel gas flow path for interconnecting a fuel tank and a canister.

### BACKGROUND ART

Conventionally, a canister has been provided in an automobile, for example, for the purpose of preventing fuel gas, which is vaporized from liquid fuel in a fuel tank, from leaking to outside the automobile. The canister is connected to the fuel tank through a fuel gas flow path, to inhibit the fuel gas from being released from the fuel tank to the outside by an adsorption action of activated carbon contained therein.

Incidentally, a gas-liquid separation device for inhibiting a flow of the liquid fuel from the fuel tank to the canister may be disposed in the fuel gas flow path interconnecting the fuel tank and the canister. As disclosed in, for example, Japanese Unexamined Patent Publication No. JP-A-2006-336495 (Patent Document 1) and PCT Japanese Translation Patent Publication No. JP-A-2014-529543 (Patent Document 2), the gas-liquid separation device includes a gas passage space therein forming a fuel gas flow path to prevent the liquid fuel, which has entered in the gas passage space, from the fuel tank from directly flowing out into the canister side.

### BACKGROUND ART DOCUMENTS

### PATENT DOCUMENTS

Patent Document 1: JP-A-2006-336495
Patent Document 2: JP-A-2014-529543

### SUMMARY OF THE INVENTION

### PROBLEM THE INVENTION ATTEMPTS TO SOLVE

However, the gas-liquid separation device described in Patent Documents 1 and 2 tends to promote movement of foreign matter from the canister toward the fuel tank while the gas-liquid separation device inhibits movement of the fuel toward the canister. Therefore, for example, if foreign matter such as activated carbon particles in the canister moves toward the fuel tank and enter the gas passage space of the gas-liquid separation device for some reason, there is a possibility that the movement of the foreign matter toward the fuel tank could be promoted due to an incline or the like within the gas-liquid separation device.

One object of the present invention is to provide a gas-liquid separation device having a novel structure capable of preventing movement of foreign matter from a canister side to a fuel tank side, which is promoted internally.

### MEANS FOR SOLVING THE PROBLEM

Hereinafter, preferred embodiments for grasping the present invention will be described. However, each preferred embodiment described below is exemplary and can be appropriately combined with each other. Besides, a plurality of elements described in each preferred embodiment can be recognized and adopted as independently as possible, or can also be appropriately combined with any element described in other preferred embodiments. Accordingly, in the present invention, various other preferred embodiments can be realized without being limited to those described below.

A first preferred embodiment provides a gas-liquid separation device configured to be provided on a fuel gas flow path for interconnecting a fuel tank and a canister, the gas-liquid separation device comprising: a gas passage space comprising a gas inlet serving as an opening on a fuel tank side and a gas outlet serving as an opening on a canister side, the gas passage space constituting a part of the fuel gas flow path; and a restriction part restricting movement of foreign matter from the gas outlet to the gas inlet inside the gas passage space.

According to the gas-liquid separation device structured in accordance with the present preferred embodiment, for example, when foreign matter such as activated carbon particles contained in the canister moves from the canister to the fuel tank side, the foreign matter that enters the gas passage space of the gas-liquid separation device from the canister side is restricted from moving toward the fuel tank side by the restriction part. This prevents foreign matter entering the gas passage space from flowing out toward the fuel tank, thereby reducing or preventing problems caused by the foreign matter entering the fuel tank.

A second preferred embodiment provides the gas-liquid separation device according to the first preferred embodiment, wherein a protruding wall extending in a width direction intersecting a flow path lengthwise direction of the fuel gas flow path is provided in the gas passage space and the restriction part includes the protruding wall, and a restriction rib protrudes from a surface of the protruding wall on a gas outlet side.

According to the gas-liquid separation device structured in accordance with the present preferred embodiment, since the restriction part includes the protruding wall protruding into the gas passage space, it is possible to restrict the movement of the foreign matter by a simpler structure in comparison with a case where the movement of foreign matter is restricted by another component such as a filter or valve.

Moreover, since the restriction rib is provided on the surface of the protruding wall on the gas outlet side, even when movement of foreign matter that has entered the gas passage space through the gas outlet is restricted by the protruding wall and then attempts to move in the width direction along the protruding wall and move around the protruding wall, the restriction rib restricts the foreign matter from moving around in the width direction. In this way, the foreign matter is trapped by protruding wall and restriction rib, and the outflow of the foreign matter from the gas passage space to the fuel tank side is effectively inhibited.

A third preferred embodiment provides the gas-liquid separation device according to the first or second preferred embodiment, wherein a protruding wall extending in a width direction intersecting a flow path lengthwise direction of the fuel gas flow path is provided in the gas passage space and the restriction part includes an end part of the protruding wall, and the protruding wall includes a restrictive inclined wall part inclined such that the restrictive inclined wall part gets closer to the gas outlet toward an end part in the width direction of the fuel gas flow path.

According to the gas-liquid separation device structured in accordance with the present preferred embodiment, since the restriction part includes the protruding wall protruding into the gas passage space, it is possible to restrict the movement of the foreign matter by a simpler structure in comparison with a case where the movement of foreign matter is restricted by another component such as a filter or valve.

Moreover, since the protruding wall includes a restrictive inclined wall part, movement of foreign matter that enters the gas passage space through the gas outlet is restricted by the protruding wall, and then is less likely to move along the protruding wall toward the end part side of the protruding wall in the width direction. Therefore, foreign matter whose movement is restricted by contact with the protruding wall is less likely to move around the end of the protruding wall toward the gas inlet side, and the outflow of the foreign matter from the gas passage space toward the fuel tank side is efficiently inhibited.

A fourth preferred embodiment provides the gas-liquid separation device according to the third preferred embodiment, wherein the protruding wall includes an intermediate wall part protruding from at least one of a bottom surface and a top surface of the gas passage space at a middle of the gas passage space in the width direction, and the intermediate wall part includes the restrictive inclined wall part inclined such that the restrictive inclined wall part gets closer to the gas outlet toward end parts on both outer sides in the width direction.

According to the gas-liquid separation device structured in accordance with the present preferred embodiment, the intermediate wall part has the end parts on both outer sides in the width direction, and the restrictive inclined wall part is provided that is inclined to get closer to the gas outlet toward the ends on both outer sides in the width direction, making it difficult for foreign matter to move around both end parts in the width direction of the intermediate wall part and toward the gas inlet side. Besides, foreign matter is easier to be trapped between the restrictive inclined wall parts on both sides in the width direction, and the outflow of the foreign matter from the gas passage space to the fuel tank side is effectively suppressed.

A fifth preferred embodiment provides the gas-liquid separation device according to the third or fourth preferred embodiment, wherein the protruding wall includes a side end wall part protruding from a side surface of the gas passage space at an end part of the gas passage space in the width direction, the side end wall part is inclined so as to get closer to the gas outlet toward an end part on an inner side in the width direction, and the restriction part includes the side end wall part.

According to the gas-liquid separation device structured in accordance with the present preferred embodiment, since the restrictive inclined wall part is provided in the side end wall part that protrudes from the side surface of the gas passage space and has an end part on the inner side in the width direction, and that inclines so as to get closer to the gas outlet toward the end part of the inner side in the width direction, making it difficult for foreign matter to move around the end part of the inner side in the width direction of the side end wall part and toward the gas inlet side. Besides, since the foreign matter is easily guided and trapped between the side end wall part and the surrounding wall (side surface) of the gas passage space, the outflow of foreign matter from the gas passage space to the fuel tank side is efficiently suppressed.

A sixth preferred embodiment provides the gas-liquid separation device according to any one of the first to fifth embodiments, wherein the gas passage space includes a restrictive inclined bottom surface inclined downward from the gas inlet toward the gas outlet, and the restriction part includes the restrictive inclined bottom surface.

According to the gas-liquid separation device structured in accordance with the present preferred embodiment, since the restriction part includes the restrictive inclined bottom surface of the gas passage space, it is possible to restrict the movement of the foreign matter by a simpler structure in comparison with a case where the movement of foreign matter is restricted by another component such as a filter or valve.

The inclination of the restrictive inclined bottom surface makes it easy to guide foreign matter toward the gas outlet side, making it difficult for the foreign matter in the gas passage space to move toward the gas inlet side, effectively restricting the outflow of foreign matter from the gas passage space toward the fuel tank side.

A seventh preferred embodiment provides the gas-liquid separation device according to any one of the first to sixth embodiments, wherein a protruding wall extending in a width direction intersecting a flow path lengthwise direction of the fuel gas flow path is provided in the gas passage space and the restriction part includes the protruding wall, the gas passage space includes a return inclined bottom surface inclined downward from the gas outlet toward the gas inlet, and a through hole sized to prevent passage of the foreign matter is formed in a lower part of the protruding wall.

According to the gas-liquid separation device structured in accordance with the present preferred embodiment, since the restriction part includes the protruding wall protruding into the gas passage space, it is possible to restrict the movement of the foreign matter by a simpler structure in comparison with a case where the movement of foreign matter is restricted by another component such as a filter or valve.

Since the return inclined bottom surface is provided at the bottom surface of the gas passage space, liquid fuel that has entered the gas passage space from the fuel tank is easily guided toward the fuel tank by the inclination of the return inclined bottom surface, and is less likely to flow out of the gas passage space toward the canister. The protruding wall protruding into the gas passage space has a through hole formed at the lower part, which allows the liquid fuel to flow (return) toward the fuel tank side, making it less likely to obstruct the flow of liquid fuel toward the fuel tank side by the protruding wall.

The guiding action of the return inclined bottom surface also makes it easier for foreign matter to be guided toward the fuel tank, but the protruding wall is provided, thereby restricting the movement of foreign matter toward the fuel tank (gas inlet side). The through hole is formed in the protruding wall for allowing liquid fuel to pass through, but since the through hole is sized to prevent foreign matter from passing through, the protruding wall prevents the foreign matter from moving through the through hole toward the fuel tank.

### EFFECT OF THE INVENTION

According to the present invention, it is possible to suppress movement of foreign matter from the canister side to the fuel tank side by means of the gas-liquid separation device.

### BRIEF DESCRIPTION OF THE DRAWINGS

FIG. 1 is a plan view showing a gas-liquid separation device as a first practical embodiment of the present invention.
FIG. 2 is a cross sectional view taken along line 2-2 of FIG. 1.
FIG. 3 is a plan view of the main body member constituting the gas-liquid separation device shown in FIG. 1.
FIG. 4 is a cross sectional view taken along line 4-4 of FIG. 3.
FIG. 5 is a bottom plan view of a lid member constructing the gas-liquid separation device shown in FIG. 1.
FIG. 6A is a diagram for explaining movement of activated carbon particles in the gas-liquid separation device shown in FIG. 1, showing the state where a first protruding wall restricts the movement of the activated carbon particles.
FIG. 6B is a diagram for explaining movement of activated carbon particles in the gas-liquid separation device shown in FIG. 1, showing the state where a second protruding wall restricts the movement of the activated carbon particles.
FIG. 6C is a diagram for explaining movement of activated carbon particles in the gas-liquid separation device shown in FIG. 1, showing the state where a third protruding wall restricts the movement of the activated carbon particles.
FIG. 7 is a vertical cross-sectional view showing a gas-liquid separation device as a second practical embodiment of the present invention.

### EMBODIMENTS FOR CARRYING OUT THE INVENTION

Hereinafter, practical embodiments of the present invention will be described in reference to the drawings.

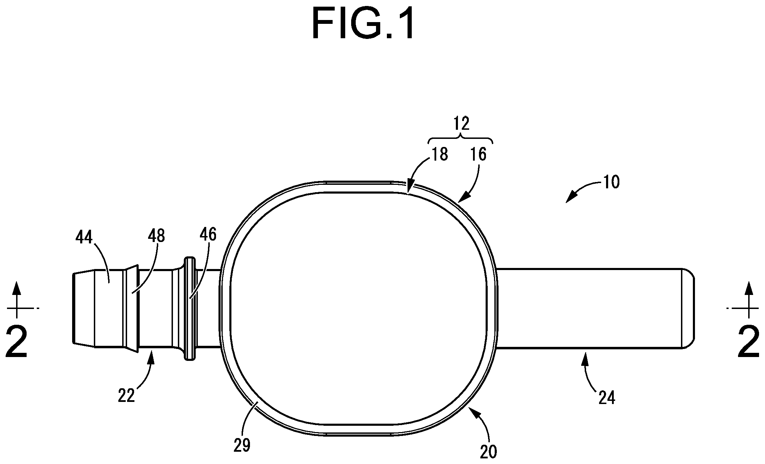

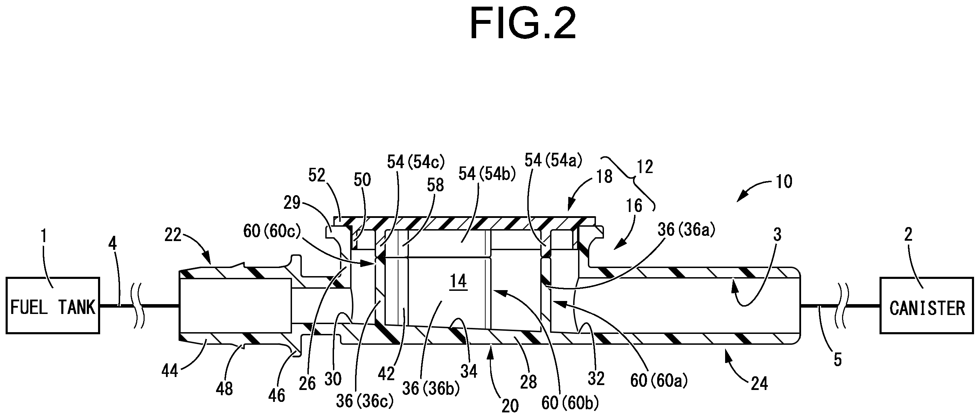

FIGS. 1 and 2 show a gas-liquid separation device 10 according to a first practical embodiment of the present invention. As shown in FIG. 2, the gas-liquid separation device 10 is disposed on the fuel gas flow path 3 interconnecting the fuel tank 1 and the canister 2, and has a gas-liquid separation function of allowing fuel gas to move from the fuel tank 1 to the canister 2 while making it difficult for liquid fuel such as gasoline or diesel oil in the fuel tank 1 to reach the canister 2. In the following description, as a general rule, the up-down direction refers to the up-down direction as shown in FIG. 2, the front-rear direction refers to the up-down direction as shown in FIG. 1, and the left-right direction refers to the left-right direction as shown in FIG. 2. Moreover, the fuel tank 1 side refers to the left side shown in FIG. 2, and the canister 2 side refers to the right side as shown in FIG. 2.

The gas-liquid separation device 10 includes a hollow housing 12, and an internal space of the housing 12 corresponds to a gas passage space 14 constituting a part of the fuel gas flow path 3. The housing 12 is constituted by assembling the main body member 16 and the lid member 18 to be overlapped one another in the up-down direction.

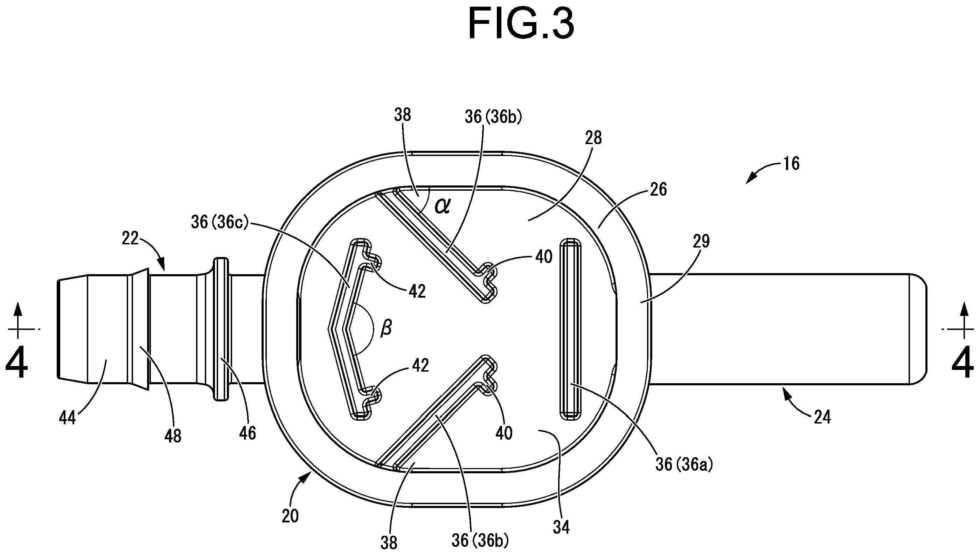

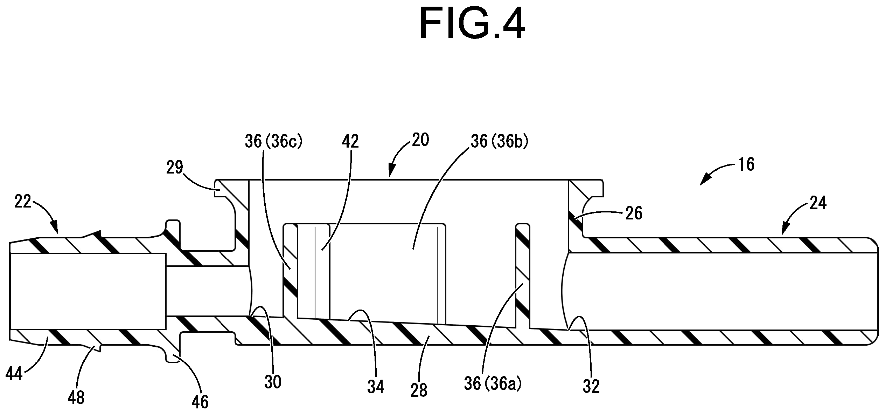

As shown in FIGS. 3 and 4, the main body member 16 integrally includes a bottomed cylindrical gas-liquid separation part 20, a tank-side connection part 22 extending from the gas-liquid separation part 20 toward the fuel tank 1, and a canister-side connection part 24 extending from the gas-liquid separation part 20 toward the canister 2.

The gas-liquid separation part 20 includes a cylindrical surrounding wall 26 which has an approximately rounded rectangular shape when viewed in the up-down direction and extends linearly in the up-down direction, and a bottom wall 28 which seals a lower opening of the surrounding wall 26. At an upper end of surrounding wall 26, a flange-shaped part 29 protruding radially outward is provided consecutively around the entire periphery. The surrounding wall 26 is formed with a gas inlet 30 passing through a lower end part on the fuel tank 1 side and a gas outlet 32 passing through a lower end part of the canister 2 side. The gas inlet 30 and the gas outlet 32 each have a circular cross-sectional shape and open into the gas passage space 14 described later provided in the radial inside of the surrounding wall 26. In the present practical embodiment, it is configured so that the gas inlet 30 has a smaller diameter than the gas outlet 32, but the size relationship between the gas inlet 30 and the gas outlet 32 is not particularly limited to the shown example, and both may have approximately the same diameter, or the gas inlet 30 may have a larger diameter.

The upper surface of bottom wall 28 corresponds to a restrictive inclined bottom surface 34 constituting the restriction part. As shown in FIG. 4, the restrictive inclined bottom surface 34 is inclined with respect to the lower surface of the bottom wall 28, which extends substantially horizontally in a normal vehicle posture, and is inclined downward from the gas inlet 30 side (fuel tank 1 side) toward the gas outlet 32 side (canister 2 side). The restrictive inclined bottom surface 34 of the present embodiment is inclined in approximately constant inclination angle, but the inclination angle may change gradually or in steps. Moreover, in the present practical embodiment, the entire upper surface of the bottom wall 28 corresponds to the restrictive inclined bottom surface 34. The bottom wall 28 is tapered from the gas inlet 30 side toward the gas outlet 32 side in accordance with the setting of the restrictive inclined bottom surface 34. In addition, the upper surface of the bottom wall 28 (restrictive inclined bottom surface 34) may be inclined or curved in the width direction perpendicular to the flow path direction connecting the gas inlet 30 and the gas outlet 32 to each other, but in present practical embodiment, it has a flat shape extending horizontally in the width direction.

The gas-liquid separation part 20 is provided with a lower restriction wall 36 protruding upward from the bottom wall 28. In the present practical embodiment, the lower restriction wall 36 includes a first lower restriction wall 36a and a pair of second lower restriction walls 36b, 36b, and a third lower restriction wall 36c as shown in FIG. 3.

The first lower restriction wall 36a is disposed approximately in the center in the front-rear direction and has a flat plate shape extending approximately perpendicular to the left-right direction, which is the flow path length direction of the fuel gas flow path 3. The first lower restriction wall 36a is disposed at a position closer to the gas outlet 32 than the center in the left-right direction, and it is preferable that a distance from the gas outlet 32 to the first lower restriction wall 36a is smaller than a front-rear width dimension of the first lower restriction wall 36a. The front-to-rear width dimension of the first lower restriction wall 36a is larger than the front-rear inside dimension of the gas outlet 32 and is preferably not less than 1.5 times larger than the front-rear inside dimension of the gas outlet 32. Therefore, the entire gas outlet 32 overlaps with the first lower restriction wall 36a when projected in the left-right direction. It is preferable that the front-rear width dimension of the first lower restriction wall 36a is within a range from 1/2 to 3/4 times the front-rear inside dimension of the gas-liquid separation part 20 at the left-to-right position where the first lower restriction wall 36a is disposed (the front-rear inside dimension of the gas passage space 14 described later).

The second lower restriction wall 36b has an outer end part in the front-rear width direction integrally continuous to the surrounding wall 26, and is a side end wall part protruding inward in the width direction from the width direction side surface, which is the inner surface of the surrounding wall 26. The second lower restriction wall 36b is a restrictive inclined wall part which extends to be inclined so as to get closer to the gas outlet 32 from the outside toward the inside in the front-rear width direction, and a corner part 38 formed between the second lower restriction wall 36b and the surrounding wall 26 on the gas outlet 32 side is an acute angle when viewed in the up-down direction. The inclination angle α of the second lower restriction wall 36b relative to the left-right direction thereof is preferably within a range from 30° to 60°. In the present practical embodiment, the second lower restriction wall 36b has a substantially constant inclination angle relative to the left-right direction throughout its length, but the inclination angle of the second lower restriction wall 36b relative to the left-right direction may change gradually or in steps.

The pair of front and rear second lower restriction walls 36b, 36b are symmetrical to each other. Moreover, the pair of second lower restriction walls 36b, 36b have their inner end parts in the front-rear direction spaced apart by a predetermined distance, and the distance between the inner end parts is smaller than the front-rear width dimension of the first lower restriction wall 36a. Therefore, the front-rear central portion of the first lower restriction wall 36a and the front-rear inner end portions of the second lower restriction walls 36b, 36b overlap each other when projected in the left-right direction.

A restriction rib 40 protruding toward the gas outlet 32 side is integrally formed on the second lower restriction wall 36b. The restriction rib 40 is provided near the end part of the second lower restriction wall 36b on the central side in the width direction, and protrudes in a direction substantially perpendicular to the second lower restriction wall 36b. The restriction rib 40 is provided at a position where the entirety thereof overlaps with the first lower restriction wall 36a when projected in the left-right direction. The protruding dimension of the restriction rib 40 from the second lower restriction wall 36b is not particularly limited, but is set, for example, larger than the outer dimensions of the foreign matter to be trapped (in present practical embodiment, the activated carbon particles 6 described later), and preferably is set to be three or more times the outer dimensions of the foreign matter. In addition, if the outer surface of the foreign matter is not spherical, the protruding dimension of the restriction rib 40 can be set based on the maximum, minimum, average, etc. of the outer dimension of the foreign matter, and if the foreign matter is particulate, it can be set based on the average particle diameter of the foreign matter.

Similar to the first lower restriction wall 36a, the third lower restriction wall 36c has both ends in the left-right direction spaced apart radially inward from the surrounding wall 26, and is an intermediate wall part provided midway in the left-right direction. The third lower restriction wall 36c is disposed at a position closer to the gas inlet 30 than the center in the left-right direction, and preferably the distance between the third lower restriction wall 36c and the gas inlet 30 is smaller than the front-rear width dimension of the third lower restriction wall 36c. The front-rear width dimension of the third lower restriction wall 36c is larger than the front-rear inside dimension of the gas inlet 30, and is preferably not less than 1.5 times the front-rear inside dimension of the gas inlet 30. Therefore, the entire gas inlet 30 overlaps with the third lower restriction wall 36c when projected in the left-right direction. It is preferable that the front-rear width dimension of the third lower restriction wall 36c is within a range from 1/2 to 3/4 times the front-rear inside dimension of the gas-liquid separation part 20 at the left-right position where the third lower restriction wall 36c is positioned. In the present practical embodiment, the front-rear width dimension of the first lower restriction wall 36a and the front-rear width dimension of the third lower restriction wall 36c are substantially the same.

The third lower restriction wall 36c is a restrictive inclined wall part which extends to be inclined so as to get closer to the gas outlet 32 side toward both outer sides from the center of the front-rear width direction, and is V-shaped when viewed in the up-down direction, in which the center thereof in the width direction is closest to the gas inlet 30. It is preferable that the central angle β formed between both side portions in the width direction of the third lower restriction wall 36c is within a range from 80° to 160°. The third lower restriction wall 36c of the present practical embodiment is inclined from the center in the front-rear direction outward at a substantially constant inclination angle, but the magnitude of the inclination angle may change gradually or in steps. Alternatively, the absolute values of the inclination angles of the third lower restriction wall 36c may be different between the both side portions, i.e., the front side portion and the rear side portion in the width direction with respect to the center in the front-rear direction.

The third lower restriction wall 36c has a width dimension in the front-rear direction larger than the distance between the inner end parts of the pair of second lower restriction walls 36b, 36b in the front-rear direction. Therefore, the outer end part of the third lower restriction wall 36c in the front-rear direction overlaps the inner end parts of the pair of second lower restriction walls 36b, 36b in the front-rear direction when projected in the left-right direction.

A restriction rib 42 protruding toward the gas outlet 32 side is integrally formed on the third lower restriction wall 36c. The restriction rib 42 is provided near end part of the both outer sides in the width direction of the third lower restriction wall 36c, and protrudes in a direction substantially perpendicular to the third lower restriction wall 36c. The restriction rib 42 is provided at a position where the entirety thereof overlaps with the second lower restriction walls 36b, 36b, when projected in the left-right direction. In addition, the protruding dimension of restriction rib 42 provided on the third lower restriction wall 36c is set in consideration of the outside dimension of the foreign matter to be trapped, similar to the restriction rib 40 provided on the second lower restriction wall 36b.

Since these first to third lower restriction walls 36a, 36b, 36b, 36c are provided, the gas inlet 30 and the gas outlet 32 are not connected linearly in the left-right direction, but are connected through a winding path.

A tank-side connection part 22 is integrally formed on the surrounding wall 26 of the gas-liquid separation part 20 at the peripheral part of the opening of the gas inlet 30. The tank-side connection part 22 has an approximately small-diameter cylindrical shape overall, and extends linearly from the peripheral part of the opening of the gas inlet 30 toward the left, which is the radially outer side of the surrounding wall 26. Therefore, the gas passage space 14 (described later), which is a space on the radially inner side of the surrounding wall 26, and the inner hole of the tank-side connection part 22 are interconnected through the gas inlet 30.

The tank-side connection part 22 has a distal end portion extending from the surrounding wall 26 forming a tube attachment part 44 with a larger diameter than the proximal end portion, and the tank-side tube 4 connecting the gas-liquid separation device 10 and the fuel tank 1 to each other is attached in an externally fitted state onto the tube attachment part 44. A collar-shaped part 46 protruding radially outward is provided at a proximal end of the tube attachment part 44, and the attachment position of the tank-side tube 4 to the tube attachment part 44 is defined by abutting of the tank-side tube 4 against the collar-shaped part 46. Moreover, a return-shaped retaining protrusion 48 protrudes from the outer peripheral surface of the tube attachment part 44, and the retaining protrusion 48 engages with the inner circumferential surface of the tank-side tube 4 externally fitted onto the tube attachment part 44, thereby preventing the tank-side tube 4 from being pulled out.

A canister-side connection part 24 is integrally formed on the surrounding wall 26 of the gas-liquid separation part 20 at the peripheral part of the opening of the gas outlet 32. The canister-side connection part 24 has approximately a small-diameter cylindrical shape overall, and extends linearly from the peripheral part of the opening of the gas outlet 32 toward the right, which is the radially outer side of the surrounding wall 26. Therefore, the gas passage space 14 (described later), which is a space on the radially inner side of the surrounding wall 26, and the inner hole of the canister-side connection part 24 are interconnected through the gas outlet 32. A canister-side tube 5 for connecting the canister 2 and the gas-liquid separation device 10 to each other is attached to the canister-side connection part 24 in an externally fitted state.

As shown in FIG. 1, the lid member 18 is a plate-like member having an approximately rounded rectangular shape corresponding to the surrounding wall 26 of the main body member 16 when viewed in the up-down direction, and as shown in FIG. 2, a fitting part 50 protruding downward is provided integrally and consecutively around the entire periphery. The lid member 18 is then attached to the main body member 16 in a state where the fitting part 50 is inserted into an upper opening of the surrounding wall 26. The lid member 18 is positioned in the up-down direction with respect to the main body member 16 by the positioning part 52, which protrudes radially outward further than the fitting part 50, being overlapped with the flange-shaped part 29 of the main body member 16 from above. The lid member 18 is preferably fixed to the main body member 16 by means of, for example, adhesive or welding. It is preferable that the space between the lid member 18 and the main body member 16 is fluid-tightly sealed to prevent leakage of liquid fuel or fuel gas.

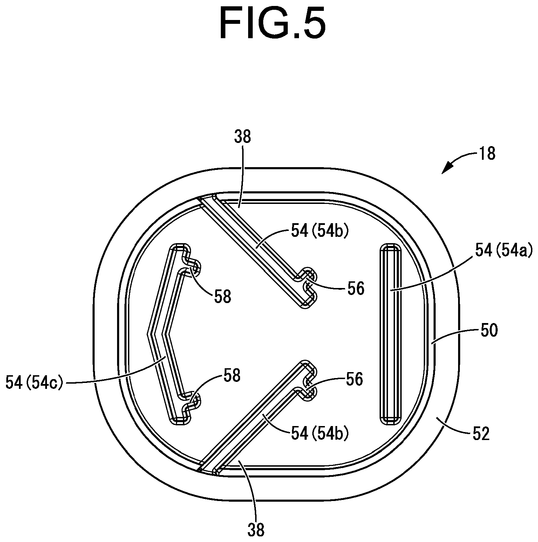

The lid member 18 is provided with an upper restriction wall 54 protruding downward. In the present practical embodiment, as shown in FIG. 5, the upper restriction wall 54 is constituted of a first upper restriction wall 54a, a pair of second upper restriction walls 54b, 54b, and a third upper restriction wall 54c.

The first upper restriction wall 54a has a shape corresponding to the first lower restriction wall 36a when viewed in the up-down direction, and when the lid member 18 is attached to the main body member 16, the lower end thereof is abutted against the first lower restriction wall 36a in the up-down direction.

The second upper restriction wall 54b has a shape corresponding to the second lower restriction wall 36b when viewed in the up-down direction, and is a side end wall part including a restrictive inclined wall part. When the lid member 18 is attached to the main body member 16, the lower end of the second upper restriction wall 54b is abutted against the upper end of the second lower restriction wall 36b in the up-down direction. The second upper restriction wall 54b includes a restriction rib 56 corresponding to the restriction rib 40 of the second lower restriction wall 36b. The restriction rib 56 protruding from the second upper restriction wall 54b toward the gas outlet 32 has a lower end abutted against the upper end of the restriction rib 40 and is provided so as to be consecutive upward with the restriction rib 40.

The third upper restriction wall 54c has a shape corresponding to the third lower restriction wall 36c when viewed in the up-down direction, and is an intermediate wall part including a restrictive inclined wall part. When the lid member 18 is attached to the main body member 16, the lower end of the third upper restriction wall 54c is abutted against the upper end of the third lower restriction wall 36c in the up-down direction. The third upper restriction wall 54c includes a restriction rib 58 corresponding to the restriction rib 42 of the third lower restriction wall 36c. The restriction rib 58 protruding from the third upper restriction wall 54c toward the gas outlet 32 side has a lower end abutted against the upper end of the restriction rib 42 and is provided so as to be consecutive upward with the restriction rib 42.

The housing 12 having the hollow structure is constituted by combining the main body member 16 and the lid member 18 having such a structure with each other. Moreover, the gas passage space 14 is formed between the main body member 16 and the lid member 18 in the housing 12. The gas passage space 14 is connected to the inner hole of the tank-side connection part 22 and the inner hole of the canister-side connection part 24, and constitutes a part of the fuel gas flow path 3 interconnecting the fuel tank 1 and the canister 2.

A protruding wall 60 that constitutes the restriction part is disposed inside the gas passage space 14. The protruding wall 60 in the present practical embodiment is constituted of a first protruding wall 60a including the first lower restriction wall 36a and the first upper restriction wall 54a abutted together in the up-down direction, a second protruding wall 60b, 60b including the second lower restriction wall 36b, 36b and the second upper restriction wall 54b, 54b abutted together in the up-down direction, and a third protruding wall 60c including the third lower restriction wall 36c and the third upper restriction wall 54c abutted together in the up-down direction. The first to third protruding walls 60a, 60b, 60b, 60c each extend in the width direction that intersects with the left-right direction, which is the flow path length direction of the fuel gas flow path 3, and the path within the gas passage space 14 connecting the gas inlet 30 and the gas outlet 32 to each other is set in a maze-like, meander shape by the first to third protruding walls 60a, 60b, 60b, 60c.

Thus, the gas inlet 30 and the gas outlet 32 are connected to each other by a meandering path due to the first to third protruding walls 60a, 60b, 60b, 60c, so that the liquid fuel that enters the gas passage space 14 from the gas inlet 30 does not linearly reach the gas outlet 32 in the left-right direction, but its flow is inhibited by the first to third protruding walls 60a, 60b, 60b, 60c. This makes it difficult for the liquid fuel that has entered the gas passage space 14 to flow out toward the canister 2, making it possible to prevent the liquid fuel from flowing into the canister 2 while allowing the fuel gas to flow into the canister 2.

Incidentally, depending on the environmental temperature conditions, for example, a pressure inside the fuel tank 1 may become relatively smaller than a pressure inside the canister 2, and thereby foreign matter inside the canister 2 (activated carbon particles 6, described later) may move from the canister 2 side toward the fuel tank 1 side. Even in such a case, if the gas-liquid separation device 10 according to the present practical embodiment is provided on the fuel gas flow path 3, it is possible to prevent foreign matter from entering the fuel tank 1.

Specifically, in the gas-liquid separation device 10, the upper surface of the bottom wall 28 of the main body member 16 is a restrictive inclined bottom surface 34 that is inclined downward from the gas inlet 30 toward the gas outlet 32, so that the activated carbon particles 6 on the bottom wall 28 are guided toward the gas outlet 32 and are less likely to move toward the gas inlet 30. Therefore, the activated carbon particles 6 are unlikely to flow out from the gas passage space 14 to the fuel tank 1 side, and the activated carbon particles 6 are unlikely to enter the fuel tank 1.

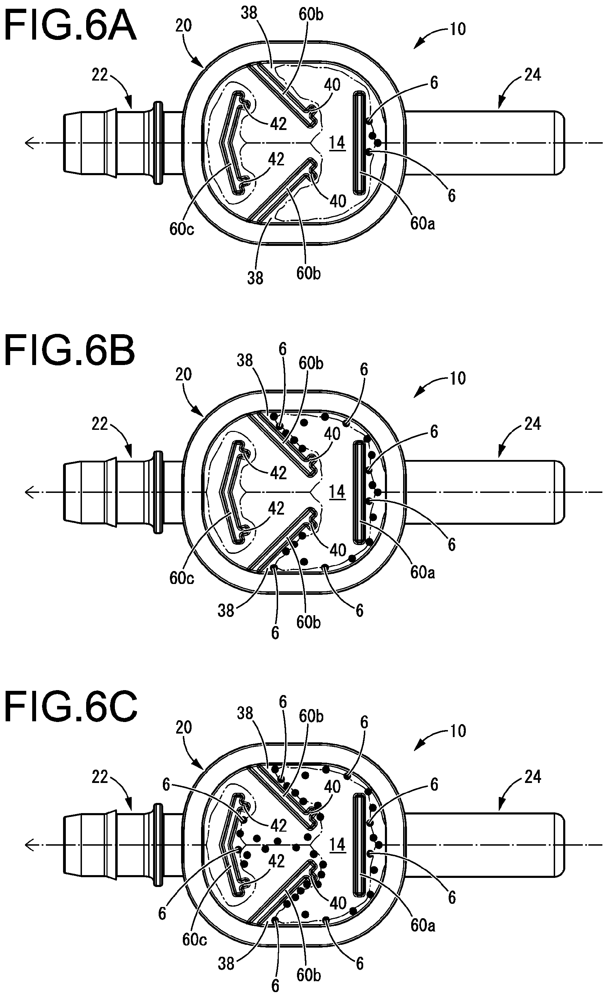

Moreover, when activated carbon particles 6 as foreign matter enter the gas passage space 14 from the canister 2 side through the gas outlet 32, the movement of the activated carbon particles 6 toward the gas inlet 30 side is restricted by contact with the first protruding wall 60a, as shown in FIG. 6A. Since the first protruding wall 60a is provided at a position close to the gas outlet 32 in the left-right direction and overlaps the entire gas outlet 32 when projected in the left-right direction, it is possible to more reliably restrict the movement of the activated carbon particles 6 that enter the gas passage space 14 from the gas outlet 32. The lid member 18 is omitted in FIG. 6 in order to show a state inside the gas passage space 14 into which the activated carbon particles 6 have entered. Moreover, FIG. 6 shows the flow path of the fluid (such as fuel gas) from the canister 2 side to the fuel tank 1 side by the dashed lines. It is assumed that the activated carbon particles 6 move along the flow path of the fluid shown by the dashed lines in FIG. 6.

When the activated carbon particles 6 further move from both outer sides in the width direction of the first protruding walls 60a toward the gas inlet 30, the movement of the activated carbon particles 6 toward the gas inlet 30 is restricted by the contact with the second protruding walls 60b, 60b provided at both end portions in the width direction of the gas passage space 14, as shown in FIG. 6B. The second protruding walls 60b, 60b have inner sides in the width direction overlapping with the first protruding wall 60a when projected in the left-right direction, so that the activated carbon particles 6 moving in the width direction outside the first protruding wall 60a are more reliably trapped by the second protruding walls 60b, 60b.

Since the second protruding walls 60b, 60b are inclined to the gas outlet 32 side toward the inner side in the width direction, the activated carbon particles 6 in contact with the second protruding walls 60b, 60b are easily guided outward in the width direction along the inclination of the second protruding walls 60b, 60b, and are trapped at the corner parts 38, thereby being prevented from moving toward the gas inlet 30.

In particular, in the present practical embodiment, the inclination angle α of the second protruding wall 60b with respect to the left-right direction is set within a range from 30° to 60°. This ensures the width dimension of the second protruding wall 60b without requiring excessive upsizing in the left-right direction, allowing the activated carbon particles 6 to be efficiently trapped by the second protruding wall 60b, and also allowing the activated carbon particles 6 trapped by the second protruding wall 60b to be stably retained at the corner part 38.

Even if the activated carbon particles 6 move to inner side in the width direction along the second protruding walls 60b, 60b, the restriction ribs 40, 56 provided on each second protruding wall 60b make it difficult for the activated carbon particles 6 to move around to the inner side in the width direction of the second protruding wall 60b, and thus the activated carbon particles 6 are prevented from moving toward the gas inlet 30.

When the activated carbon particles 6 move further toward the gas inlet 30 through the space between the inner end parts in the width direction of the second protruding walls 60b, 60b, the movement of the activated carbon particles 6 toward the gas inlet 30 is restricted by the contact with the third protruding wall 60c, as shown in FIG. 6C. Since the end parts in the width direction outside the third protruding wall 60c overlap with the second protruding walls 60b, 60b when projected in the left-right direction, the activated carbon particles 6 moving between the end parts in the width direction inside the second protruding walls 60b, 60b are more reliably captured by the third protruding wall 60c.

Since the third protruding wall 60c is inclined toward the inner side in the width direction to the gas inlet 30 side, and is V-shaped expanding toward the gas outlet 32 when viewed in the up-down direction, the activated carbon particles 6 in contact with the third protruding wall 60c are easily guided inward in the width direction along the inclination of the third protruding wall 60c, and are prevented from moving toward the gas inlet 30 by the third protruding wall 60c.

In particular, in the present practical embodiment, the central angle β of the third protruding wall 60c is set within a range from 80° to 160°. This ensures the width dimension of the third protruding wall 60c without requiring excessive upsizing in the left-right direction, allowing the activated carbon particles 6 to be efficiently trapped by the third protruding wall 60c, and also allowing the activated carbon particles 6 trapped by the third protruding wall 60c to be stably retained at a center portion in the width direction.

Even if the activated carbon particles 6 move to outer side in the width direction along the third protruding wall 60c, the restriction ribs 42, 58 provided on the third protruding wall 60c make it difficult for the activated carbon particles 6 to move around to the outer side in the width direction of the third protruding wall 60c, and thus the activated carbon particles 6 are prevented from moving toward the gas inlet 30.

As described above, the activated carbon particles 6 that have entered the gas passage space 14 from the gas outlet 32 are restricted from moving toward the gas inlet 30 side by the restrictive inclined bottom surface 34, and their movement toward the gas inlet 30 is restricted in multiple stages by the first to third protruding walls 60a, 60b, 60b, 60c, making it difficult for the activated carbon particles 6 to flow out toward the fuel tank 1 side through the gas inlet 30. This prevents problems caused by the activated carbon particles 6 that have entered the fuel tank 1. As is clear from this, in the present practical embodiment, the restriction part that restricts the movement of the activated carbon particles 6 toward the gas inlet 30 is constituted of the restrictive inclined bottom surface 34 and the first to third protruding walls 60a, 60b, 60b, 60c.

Furthermore, the first to third protruding walls 60a, 60b, 60b, 60c are shaped and positioned to particularly easily restrict the movement of particulate foreign matter from the gas outlet 32 toward the gas inlet 30 within the gas passage space 14, thereby effectively restricting the movement of the activated carbon particles 6 from the canister 2 side toward the fuel tank 1 side.

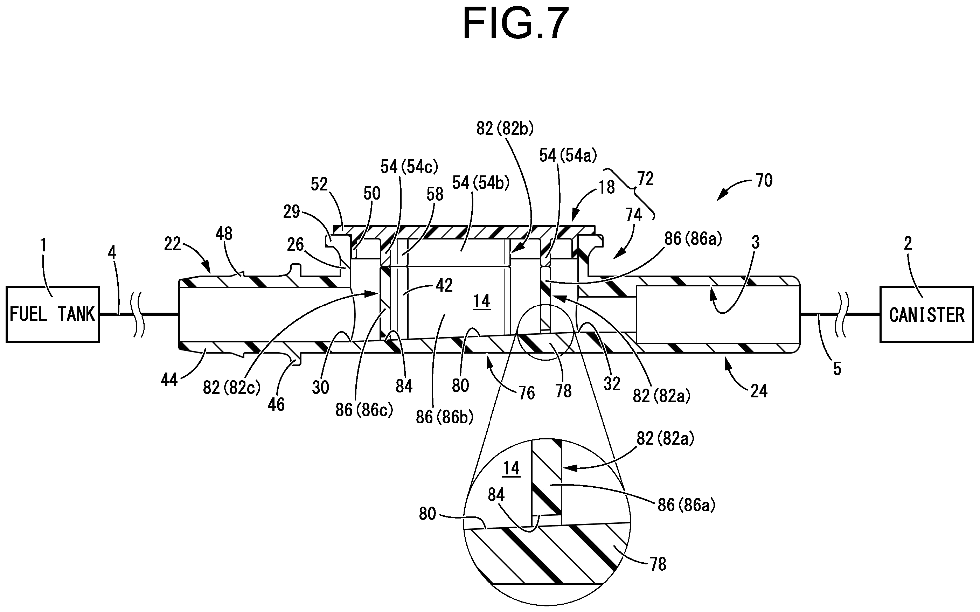

FIG. 7 shows a gas-liquid separation device 70 according to a second practical embodiment of the present invention. The gas-liquid separation device 70 includes a hollow housing 72, and the housing 72 is constituted of a main body member 74 and the lid member 18. In the following description, the same components and parts as those in the first practical embodiment are denoted by the same reference numerals in the drawings, and the description thereof will be omitted.

The main body member 74 integrally includes a gas-liquid separation part 76, the tank-side connection part 22, and the canister-side connection part 24. The gas-liquid separation part 76 includes the surrounding wall 26 and a bottom wall 78, and an upper surface of the bottom wall 78 corresponds to a return inclined bottom surface 80 inclined downward from the gas outlet 32 toward the gas inlet 30. The return inclined bottom surface 80 has an inclination direction opposite to that of the restrictive inclined bottom surface 34 in the first practical embodiment, and is configured to guide the fluid and particles in the gas passage space 14 toward the gas inlet 30 side.

A protruding wall 82 that constitutes the restriction part is disposed inside the gas passage space 14. The protruding wall 82 of the present practical embodiment is constituted of a first protruding wall 82a, second protruding walls 82b, 82b, and a third protruding wall 82c. The first to third protruding walls 82a, 82b, 82b, 82c in the present practical embodiment basically have the same shape and structure as the first to third protruding walls 60a, 60b, 60b, and 60c in the first practical embodiment, and extend to intersect the left-right direction, which is the flow path length direction of the fuel gas flow path 3.

The first to third protruding walls 82a, 82b, 82b, 82c each have a through hole 84 formed in the lower part thereof. The through hole 84 is formed by passing through the lower end of the lower restriction wall 86 (first lower restriction wall 86a, second lower restriction walls 86b, 86b, third lower restriction wall 86c) provided on the main body member 74 in the left-right direction.

The through holes 84 are sized to prevent the passage of the activated carbon particles 6. The through holes 84 are preferably sized to trap 90% or more of the foreign matter (activated carbon particles 6) that is assumed to be trapped. For example, the maximum inner dimension of the through hole 84 is formed to be smaller than the maximum outer dimension of the activated carbon particle 6. The inside dimension of the through hole 84 can be appropriately set in consideration of a particle diameter of the activated carbon particles 6, and from a practical standpoint, it is preferable to be set as, for example, 0.2mm or less. The cross-sectional shape of the through holes 84 is not particularly limited, but for example, by setting the cross-sectional shape of the holes flat, it is possible to prevent the passage of the activated carbon particles 6 while ensuring the cross-sectional area of the holes.

According to such a gas-liquid separation device 70 of the present practical embodiment, as in the first practical embodiment, the first to third protruding walls 82a, 82b, 82b, 82c restrict the movement of the activated carbon particles 6 from the gas outlet 32 toward the gas inlet 30, making it difficult for the activated carbon particles 6 to enter the fuel tank 1. In the present practical embodiment, the through hole 84 is formed in each of the first to third protruding walls 82a, 82b, 82b, 82c, but since the through holes 84 have the magnitude capable of preventing the passage of the activated carbon particles 6, the through holes 84 are unlikely to affect the ability of the first to third protruding walls 82a, 82b, 82b, 82c to trap the activated carbon particles 6.

Moreover, in the gas-liquid separation device 70 of the present practical embodiment, when liquid fuel enters the gas passage space 14 from the fuel tank 1, the liquid fuel is less likely to flow out of the gas passage space 14 toward the canister 2 and is also less likely to remain within the gas passage space 14. Specifically, since the upper surface of the bottom wall 78 of the gas-liquid separation part 76 is formed as a return inclined bottom surface 80 inclined downward from the canister 2 side toward the fuel tank 1 side, the liquid fuel that enters the gas passage space 14 tends to flow toward the fuel tank 1 side due to the inclination of the return inclined bottom surface 80, and is less likely to flow toward the canister 2 side. Furthermore, since the through holes 84 are formed at the lower ends of the first to third protruding walls 82a, 82b, 82b, 82c, the flow of liquid fuel toward the fuel tank 1 is less likely to be inhibited by the first to third protruding walls 82a, 82b, 82b, 82c, and the liquid fuel can easily return to the fuel tank 1 through the through holes 84.

As described above, according to the gas-liquid separation device 70 of the present practical embodiment, the return inclined bottom surface 80 and the through hole 84 act to return the liquid fuel to the fuel tank 1 side, thereby preventing the liquid fuel from entering the canister 2, while the first to third protruding walls 82a, 82b, 82b, 82c act to trap the activated carbon particles 6, thereby effectively suppressing the activated carbon particles 6 from entering the fuel tank 1.

Although the practical embodiments of the present invention have been described in detail above, the present invention is not limited to the specific descriptions. For example, the restriction part restricting the movement of foreign matter toward the fuel tank 1 is not necessarily limited to be constituted of the combination of the protruding walls and the restrictive inclined bottom surface as shown in the above practical embodiments. That is, the restriction part may be constituted of only any one of the protruding wall and the restrictive inclined bottom surface, or may be constituted of something other than the protruding wall and the restrictive inclined bottom surface. Specifically, for example, the restriction part can be provided by imparting adhesiveness to the inner surface of the gas passage space 14 so that foreign matter can be trapped by adhesion, or by partitioning the gas passage space 14 with a mesh-shaped member.

The specific configuration of the protruding walls is not to be construed as being limited by the first to third protruding walls 60a, 60b, 60b, 60c as described in the above practical embodiments. For example, the protruding walls may be constituted of only the first protruding wall 60a and the second protruding walls 60b, 60b, without the third protruding wall 60c. Moreover, for example, a restrictive inclined wall part or a restriction rib such as the third protruding wall 60c may be formed on the first protruding wall 60a.

The protruding wall is not limited to a component protruding in the up-down direction. For example, a partial inclined surface that is inclined downward toward the gas outlet 32 may be provided on the bottom wall 78 of the gas passage space 14, and a wall protruding in the left-right direction from the inclined surface toward the gas outlet 32 may be provided, so as to trap the activated carbon particles 6 moving along the upper surface of the bottom wall 78 by the wall.

The protruding wall protruding in the up-down direction may be, for example, constituted of only the lower restriction wall 36 protruding upward from the bottom wall 28 of the main body member 16, or may be composed of only the upper restriction wall 54 protruding downward from the lid member 18, and it is not necessarily for the upper and lower restriction walls 36, 54 to be abutted together. When the protruding wall protrudes in the up-down direction, it does not need to be provided continuously over the entire top and bottom of the gas passage space 14; for example, a protruding wall formed by the lower restriction wall 36 protruding from the bottom wall 28 may be spaced downward from the lid member 18.

The protruding wall 60 in the practical first and second practical embodiments has both the wall surface on the gas inlet 30 side and the wall surface on the gas outlet 32 side being inclined, and is a restrictive inclined wall part that extends with a substantially constant thickness. However, the shape of the wall surface on the gas inlet 30 side is not limited, and the restrictive inclined wall part may have any shape as long as the wall surface on the gas outlet 32 side is inclined in the left-right direction. Therefore, the restrictive inclined wall part is not necessarily limited to the wall part that extends with a constant thickness dimension, and the thickness dimension may vary in the width direction.

In the above practical embodiments, the protruding wall 60 is exemplified as a restrictive inclined wall part in its entirety, but the protruding wall may also be partially inclined as a restrictive inclined wall part, for example, at an end part or middle portion in the width direction. Specifically, for example, the third protruding wall 60c as the intermediate wall part shown in the above practical embodiments is V-shaped with the entire wall part being a restrictive inclined wall part, but both end parts in the width direction may be restrictive inclined plane surfaces that expand toward the gas outlet 32 side, and the central portion in the width direction may expand approximately perpendicular to the left and right direction.

Moreover, the angle of inclination of the restrictive inclined wall part does not have to be constant, and the restrictive inclined wall part may be curved or bent. Specifically, for example, an intermediate wall part that is curved in an arc shape and expands toward the gas outlet 32 side can be used as the restriction part.

The restrictive inclined bottom surfaces 34 shown in the first practical embodiment and the return inclined bottom surface 80 shown in the second practical embodiment may be provided partially on the bottom wall 28 (78) in the gas passage space 14. Moreover, the restrictive inclined bottom surface 34 and the return inclined bottom surface 80 may have a variable inclination angle, and may be, for example, a curved surface. In addition, for example, on the upper surface of the bottom wall 78 in the gas passage space 14, the restrictive inclined bottom surface 34 may be provided on the gas outlet 32 side, and the return inclined bottom surface 80 may be provided on the gas inlet 30 side, the restrictive inclined bottom surface 34 and the return inclined bottom surface 80 may also be adopted in combination.

The specific shape of the gas passage space 14 is not limited to the rounded rectangular shape as in the above practical embodiments, but may be set appropriately.

### KEYS TO SYMBOLS

10 gas-liquid separation device (first practical embodiment)
12 housing
14 gas passage space
16 main body member
18 lid member
20 gas-liquid separation part
22 tank-side connection part
24 canister-side connection part
26 surrounding wall
28 bottom wall
29 flange-shaped part
30 gas inlet
32 gas outlet
34 restrictive inclined bottom surface (restriction part)
36 lower restriction wall
36a first lower restriction wall
36b second lower restriction wall
36c third lower restriction wall
38 corner part
40 restriction rib
42 restriction rib
44 tube attachment part
46 collar-shaped part
48 retaining protrusion
50 fitting part
52 positioning part
54 upper restriction wall
54a first upper restriction wall
54b second upper restriction wall
54c third upper restriction wall
56 restriction rib
58 restriction rib
60 protruding wall (restriction part)
60a first protruding wall
60b second protruding wall (side end wall part)
60c third protruding wall (intermediate wall part)
70 gas-liquid separation device (second practical embodiment)
72 housing
74 main body member
76 gas-liquid separation part
78 bottom wall
80 return inclined bottom surface
82 protruding wall (restriction part)
82a first protruding wall
82b second protruding wall (side end wall part)
82c third protruding wall (intermediate wall part)
84 through hole
86 lower restriction wall
86a first lower restriction wall
86b second lower restriction wall
86c third lower restriction wall
1 fuel tank
2 canister
3 fuel gas flow path
4 tank-side tube
5 canister-side tube
6 activated carbon particle

## Claims

1. A gas-liquid separation device configured to be provided on a fuel gas flow path for interconnecting a fuel tank and a canister, the gas-liquid separation device comprising:
a gas passage space comprising a gas inlet serving as an opening on a fuel tank side and a gas outlet serving as an opening on a canister side, the gas passage space constituting a part of the fuel gas flow path; and
a restriction part restricting movement of foreign matter from the gas outlet to the gas inlet inside the gas passage space.

2. The gas-liquid separation device according to claim 1, wherein
a protruding wall extending in a width direction intersecting a flow path lengthwise direction of the fuel gas flow path is provided in the gas passage space and the restriction part includes the protruding wall, and
a restriction rib protrudes from a surface of the protruding wall on a gas outlet side.

3. The gas-liquid separation device according to claim 1 or 2, wherein
a protruding wall extending in a width direction intersecting a flow path lengthwise direction of the fuel gas flow path is provided in the gas passage space and the restriction part includes the protruding wall, and
the protruding wall includes a restrictive inclined wall part inclined such that the restrictive inclined wall part gets closer to the gas outlet toward an end part in the width direction of the fuel gas flow path.

4. The gas-liquid separation device according to claim 3, wherein
the protruding wall includes an intermediate wall part protruding from at least one of a bottom surface and a top surface of the gas passage space at a middle of the gas passage space in the width direction, and
the intermediate wall part includes the restrictive inclined wall part inclined such that the restrictive inclined wall part gets closer to the gas outlet toward end parts on both outer sides in the width direction.

5. The gas-liquid separation device according to claim 3 or 4, wherein
the protruding wall includes a side end wall part protruding from a side surface of the gas passage space at an end part of the gas passage space in the width direction, and
the side end wall part includes the restrictive inclined wall part inclined such that the restrictive inclined wall part gets closer to the gas outlet toward an end part on an inner side in the width direction.

6. The gas-liquid separation device according to any one of claims 1-5, wherein the gas passage space includes a restrictive inclined bottom surface inclined downward from the gas inlet toward the gas outlet, and the restriction part includes the restrictive inclined bottom surface.

7. The gas-liquid separation device according to any one of claims 1-6, wherein
a protruding wall extending in a width direction intersecting a flow path lengthwise direction of the fuel gas flow path is provided in the gas passage space and the restriction part includes the protruding wall,
the gas passage space includes a return inclined bottom surface inclined downward from the gas outlet toward the gas inlet, and
a through hole sized to prevent passage of the foreign matter is formed in a lower part of the protruding wall.
